# EUROPEAN PATENT APPLICATION

(11) **EP 4 738 263 A1**
(43) Date of publication of application: **06.05.2026**
(21) Application number: 23952347.5
(22) Date of filing: 14.09.2023
(51) Int. Cl.: G06T 11/00, G10L 15/26, G06F 40/56, G06F 40/279, G10L 15/22, G10L 15/30

(54) **ARTIFICIAL INTELLIGENCE DEVICE AND OPERATING METHOD THEREOF**

(71) Applicant: LG Electronics Inc., Yeongdeungpo-gu Seoul 07336 (KR)
(72) Inventor: KIM, Yong Tae, Seoul 06772 (KR); PARK, Jae Cul, Seoul 06772 (KR); LEE, Seong Hak, Seoul 06772 (KR)
(74) Representative: Vossius & Partner Patentanwälte Rechtsanwälte mbB
(86) International application number: PCT/KR2023/013814
(87) International publication number: WO 2025/058107

(57) **Abstract**

An artificial intelligence device according to an embodiment of the present disclosure includes a communication unit that communicates with a display device and a processor configured to receive a request for generating an image for a standby screen from the display device, and operating state information of an electronic device linked with the display device through the communication unit, generate a first prompt for natural language generation based on an analysis result of the image generation request and the operating state information of the electronic device, transmit the first prompt to a first generative artificial intelligence server, receive a plurality of sentences in response to the first prompt from the first generative artificial intelligence server, generate a second prompt for image generation based on the plurality of sentences, transmit the second prompt to a second generative artificial intelligence server, and receive a plurality of images corresponding to operating states of the electronic device from the second generative artificial intelligence server.

## Description

### [Technical Field]

The present disclosure relates to an artificial intelligence device, and more particularly, to an artificial intelligence device capable of generating images that match user utterances.

### [Background Art]

Digital TV services using wired or wireless communication networks are becoming widespread. Digital TV services can provide various services that could not be provided by conventional analog broadcasting services.

For example, in the case of IPTV (Internet Protocol Television) and smart TV services, which are types of digital TV services, they provide interactivity that allows users to actively select the type of viewing program, viewing time, and the like. Based on this interactivity, IPTV and smart TV services can also provide various additional services, such as internet search, home shopping, online games, and the like.

Conventional standby screens provided by TVs use a method where users select images from a predetermined UI, resulting in limited standby screen settings.

Additionally, the information that TVs can utilize for providing images for standby screens has been limited to predetermined content such as connected products and connection information delivered based on predetermined rules.

### [Disclosure]

### [Technical Problem]

An object of the present disclosure is to provide information and user interfaces desired by users on a standby screen without changing the software of a display device.

Another object of the present disclosure is to provide desired images on a standby screen with simple utterances for image generation.

### [Technical Solution]

An artificial intelligence device according to an embodiment of the present disclosure includes a communication unit that communicates with a display device, and a processor configured to receive a request for generating an image for a standby screen from the display device and operating state information of an electronic device linked with the display device through the communication unit, generate a first prompt for natural language generation based on an analysis result of the image generation request and the operating state information of the electronic device, transmit the first prompt to a first generative artificial intelligence server, receive a plurality of sentences in response to the first prompt from the first generative artificial intelligence server, generate a second prompt for image generation based on the plurality of sentences, transmit the second prompt to a second generative artificial intelligence server, and receive a plurality of images corresponding to operating states of the electronic device from the second generative artificial intelligence server.

An operation method of an artificial intelligence device according to an embodiment of the present disclosure includes receiving a request for generating an image for a standby screen from a display device and operating state information of an electronic device linked with the display device; generating a first prompt for natural language generation based on an analysis result of the image generation request and the operating state information of the electronic device; transmitting the first prompt to a first generative artificial intelligence server; receiving a plurality of sentences in response to the first prompt from the first generative artificial intelligence server; generating a second prompt for image generation based on the plurality of sentences; transmitting the second prompt to a second generative artificial intelligence server; and receiving a plurality of images corresponding to operating states of the electronic device from the second generative artificial intelligence server.

### [Advantageous Effect]

According to an embodiment of the present disclosure, information and user interfaces desired by users can be provided on a standby screen without changing the software of the display device. Accordingly, the utilization of the standby screen reflecting the user's intention can be increased.

According to an embodiment of the present disclosure, users can have desired images provided on a standby screen with simple utterances for image generation. Accordingly, the interaction between the user and the display device can be strengthened.

### [Description of Drawings]

FIG. 1 is a block diagram illustrating a configuration of a display device according to an embodiment of the present invention.
FIG. 2 is a block diagram of a remote control device according to an embodiment of the present invention.
FIG. 3 illustrates an actual configuration example of a remote control device according to an embodiment of the present invention.
FIG. 4 illustrates an example of utilizing a remote control device according to an embodiment of the present invention.
FIG. 5 illustrates an artificial intelligence (AI) server according to an embodiment of the present disclosure.
FIG. 6 is a ladder diagram for explaining an operation method of an Al system according to an embodiment of the present disclosure.
FIGS. 7a and 7b are diagrams explaining a process of generating standby screen images through generative Al according to an embodiment of the present disclosure.
FIGS. 8a and 8b are diagrams explaining changes of images displayed on a standby screen according to state changes of an electronic device linked with a display device.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

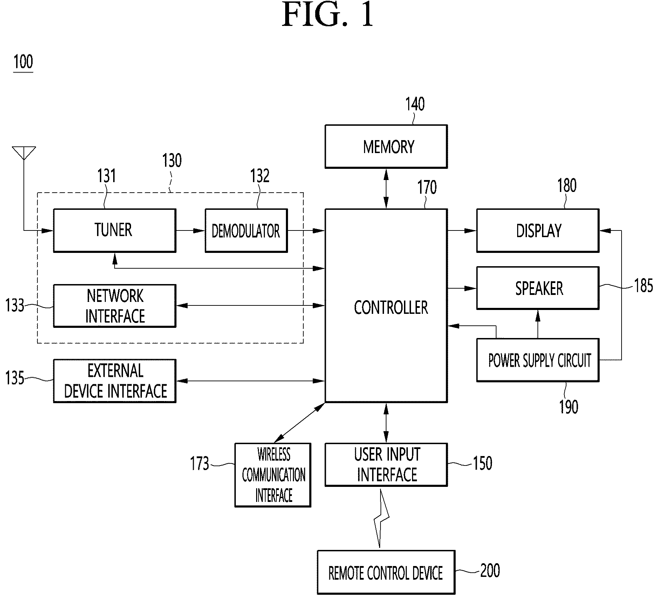

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list from an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a settop box, a Blu-ray player, a DVD player, a game console, a sound bar, a smartphone, a PC, a USB memory, and a home theater system but this is just exemplary.

The network interface 133 may provide an interface for connecting the display device 100 to a wired/wireless network including internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), WirelessFidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

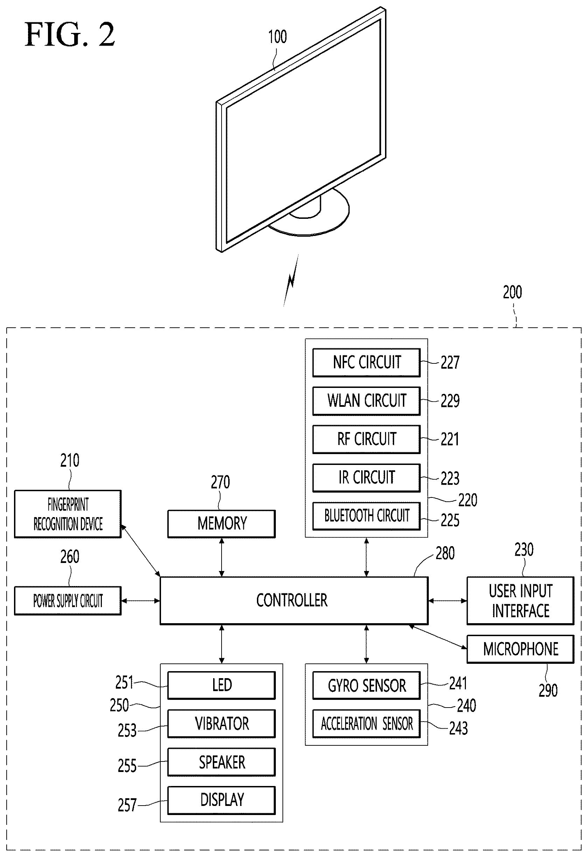

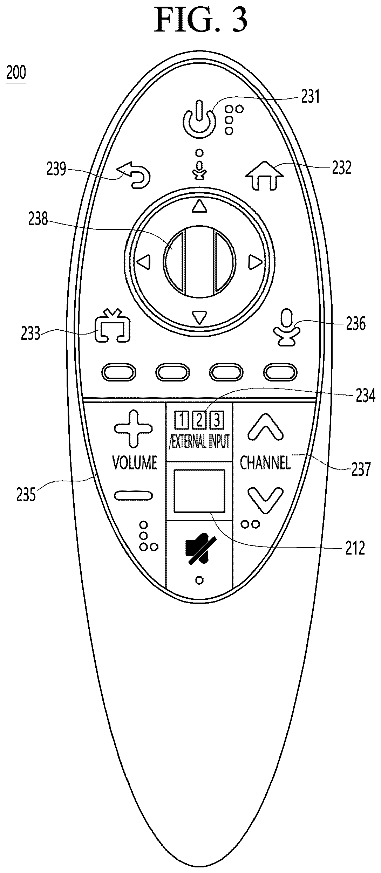

A remote control device according to an embodiment of the present disclosure will be described with reference to FIGS. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to FIG. 2, the wireless communication interface 220 transmits/receives signals to/from any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmit/receive signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

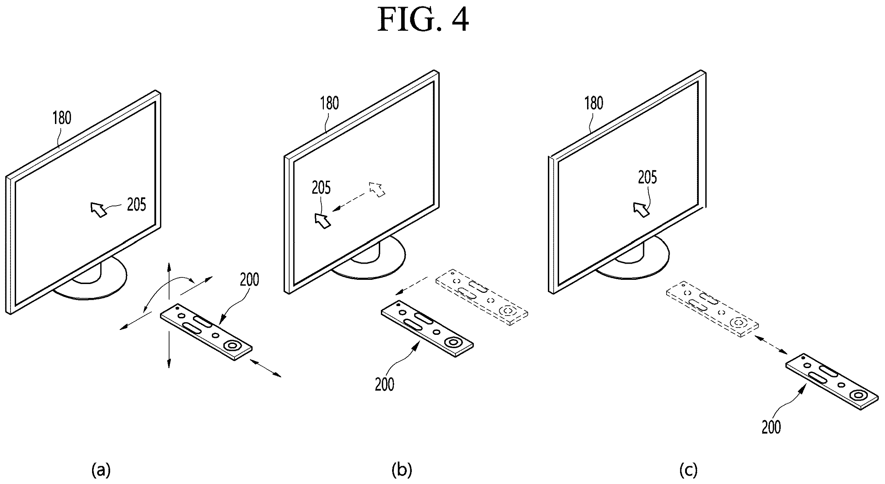

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as shown in the drawing, the remote control device 200 may be referred to as a spatial remote control device.

FIG. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement may not be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

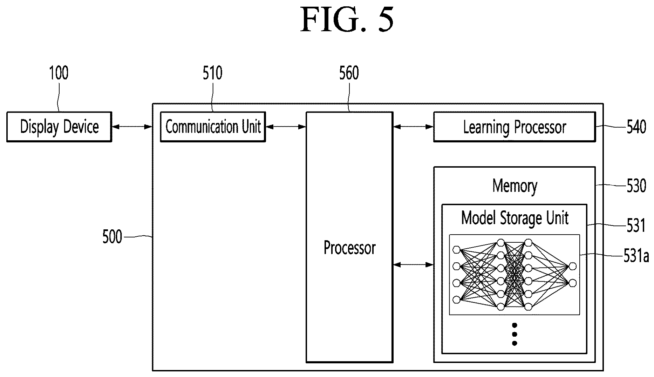

FIG. 5 illustrates an artificial intelligence (AI) server according to an embodiment of the present disclosure.

Referring to FIG. 5, the Al server 500 may mean a device that trains artificial neural networks using machine learning algorithms or uses trained artificial neural networks.

The Al server 500 may be configured with a plurality of servers to perform distributed processing, and may be defined as a 5G network.

The Al server 500 may be included as part of the configuration of the Al device 100 to perform at least some of the Al processing together.

The Al server 500 may include a communication unit 510, a memory 530, a learning processor 540, and a processor 560.

The communication unit 510 may transmit and receive data to and from external devices such as the display device 100.

The memory 530 may include a model storage unit 531.

The model storage unit 531 may store a model being trained or a trained model (or artificial neural network 531a) through the learning processor 540.

The learning processor 540 may train the artificial neural network 531a using training data. The training model may be used while being mounted on the Al server 500 of the artificial neural network, or may be mounted and used on an external device such as the display device 100.

The training model may be implemented in hardware, software, or a combination of hardware and software. When part or all of the training model is implemented in software, one or more instructions constituting the training model may be stored in the memory 530.

The processor 560 may infer a result value for new input data using the training model, and may generate a response or control command based on the inferred result value.

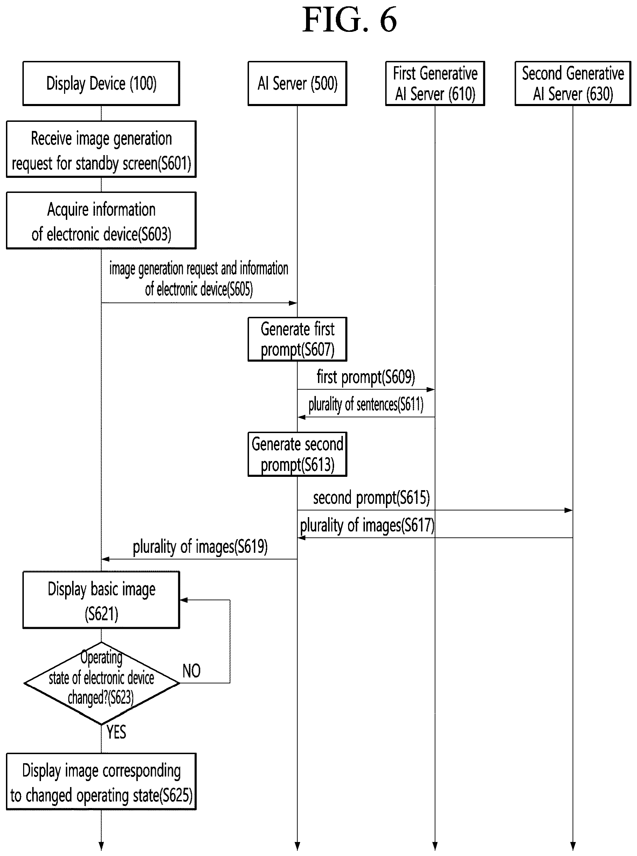

FIG. 6 is a ladder diagram for explaining an operation method of an Al system according to an embodiment of the present disclosure.

Referring to FIG. 6, the Al system may include a display device 100, an Al server 500, a first generative Al server 610, and a second generative Al server 630.

In FIG. 6, the first generative Al server 610 and the second generative Al server 630 may be configured as one server.

Also, although FIG. 6 describes two generative Al servers as an example, three or more generative Al servers may be provided.

Referring to FIG. 6, the controller 170 of the display device 100 may receive an image generation request for a standby screen (S601).

In one embodiment, the standby screen may be a screen displayed in a low-power mode of the display device 100.

The image generation request may be any one of a voice command uttered by a user, a text input by the user, or a command received from the remote control device 200.

The controller 170 of the display device 100 may acquire information of an electronic device linked with the display device 100 (S603).

The information of the electronic device may include a name of the electronic device and operating state information of the electronic device.

The operating state information may include operating states of the electronic device. For example, when the electronic device is a home appliance having washing and drying functions, the operating state information may include washing start, washing in progress, washing complete, drying start, drying in progress, and drying complete.

The controller 170 may receive the information of the electronic device from one or more electronic devices linked with the display device 100 through the network interface 133.

In one embodiment, the controller 170 may transmit a request message to the electronic device according to the image generation request, and may receive the information of the electronic device in response to the request message.

In another embodiment, the controller 170 may transmit a request message to the electronic device before obtaining the image generation request, and may acquire the information of the electronic device in advance in response to the request message.

The controller 170 of the display device 100 may transmit the image generation request and the information of the electronic device to the Al server 500 through the network interface 133 (S605).

The controller 170 may transmit the image generation request and the information of the electronic device to the communication unit 510 of the Al server 500 through the network interface 133.

The processor 560 of the Al server 500 may generate a first prompt based on the received image generation request and the information of the electronic device (S607).

In one embodiment, the first prompt may be a command to be input to a generative Al model mounted on the first generative Al server 610.

The generative Al model may be a model that generates content in response to a command using deep learning or machine learning.

The first prompt may be a command that causes a natural language generation Al model to generate natural language.

The processor 560 may generate the first prompt by combining the image generation request and the information of the electronic device. The processor 560 may generate the first prompt using an analysis result of the image generation request, a name of the electronic device, and operating state information of the electronic device.

The analysis result of the image generation request may include a user's intention.

For example, when the image generation request is a voice command uttered by the user, the processor 560 may convert the voice command into text and obtain an analysis result of the converted text using a natural language processing engine.

The analysis result of the voice command may be a result requesting generation of an image of a specific atmosphere for the standby screen.

The processor 560 may generate one sentence by combining the analysis result of the image generation request, the name of the electronic device, and the operating state information of the electronic device, and may obtain the generated sentence as the first prompt.

The processor 560 of the Al server 500 may transmit the generated first prompt to the first generative Al server 610 through the communication unit 510 (S609).

The first generative Al server 610 may be a server that generates natural language in response to prompts.

The first generative Al server 610 may generate a plurality of sentences in response to the first prompt. Each of the plurality of sentences may be a sentence representing characteristics of the analysis result of the image generation request and each operating state of the electronic device.

Each of the plurality of sentences may be a sentence commanding generation of an image reflecting the analysis result of the image generation request and characteristics of each operating state of the electronic device.

The processor 560 of the Al server 500 may receive a plurality of sentences in response to the first prompt from the first generative Al server 610 (S611).

The first generative Al server 610 may generate a plurality of sentences in response to the first prompt. Each of the plurality of sentences may be a sentence representing characteristics of the analysis result of the image generation request and each operating state of the electronic device.

The first generative Al server 610 may transmit the generated plurality of sentences to the Al server 500.

The processor 560 of the Al server 500 may generate a second prompt based on the received plurality of sentences (S613).

In one embodiment, the second prompt may be a command to be input to a generative Al model mounted on the second generative Al server 630.

The second prompt may be a command that causes an image generation Al model of the second generative Al server 630 to generate images.

The processor 560 may generate a second prompt including the plurality of sentences that are responses to the first prompt and operating states of the electronic device corresponding to each sentence.

The second prompt may include only one of the plurality of sentences and an operating state corresponding to that sentence.

The second prompt may include the plurality of sentences received from the first generative Al server 610.

The processor 560 of the Al server 500 may transmit the generated second prompt to the second generative Al server 630 through the communication unit 510 (S615).

The second generative Al server 630 may be a server that generates images in response to the second prompt.

The second generative Al server 630 may generate a plurality of images in response to the second prompt. Each of the plurality of images may be an image representing characteristics of the analysis result of the image generation request and each operating state of the electronic device.

The processor 560 of the Al server 500 may receive a plurality of images in response to the second prompt from the second generative Al server 630 (S617).

The processor 560 may store the received plurality of images in the memory 530 or in an external database (not shown).

The processor 560 of the Al server 500 may transmit the plurality of images to the display device 100 through the communication unit 510 (S619).

The processor 560 may transmit the plurality of images to the network interface 133 of the display device 100 through the communication unit 510.

Each of the plurality of images may be matched with each of the plurality of operating states.

The controller 170 of the display device 100 displays a basic image among the plurality of images on the display 180 upon entering the standby screen (S621).

The basic image may be an image corresponding to a basic operating state of the electronic device.

The basic image may be an image corresponding to the analysis result of the image generation request and the basic operating state of the electronic device.

The controller 170 of the display device 100 may determine whether the operating state of the electronic device has changed while displaying the basic image (S623).

The controller 170 may determine whether the operating state of the electronic device has changed from a first state to a second state.

The controller 170 may periodically receive information about the operating state of the electronic device from the electronic device, and based on the received information, may determine whether the operating state of the electronic device has changed.

When the operating state of the electronic device has changed, the controller 170 of the display device 100 may display an image corresponding to the changed operating state among the plurality of images on the display 180 (S625).

When the operating state of the electronic device changes from the first state to the second state, the controller 170 may change a first image corresponding to the first state to a second image corresponding to the second state on the standby screen.

As described above, according to an embodiment of the present disclosure, information and user interfaces desired by users can be provided on the standby screen without changing the software of the display device 100.

Accordingly, the utilization of the standby screen reflecting the user's intention can be increased.

Meanwhile, the controller 170 may display an image corresponding to the operating state of the electronic device and a notification indicating the operating state on the display 180.

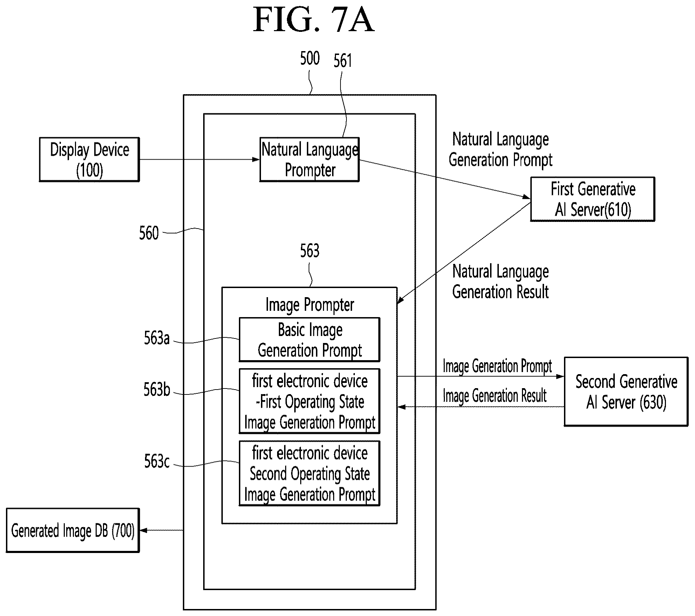

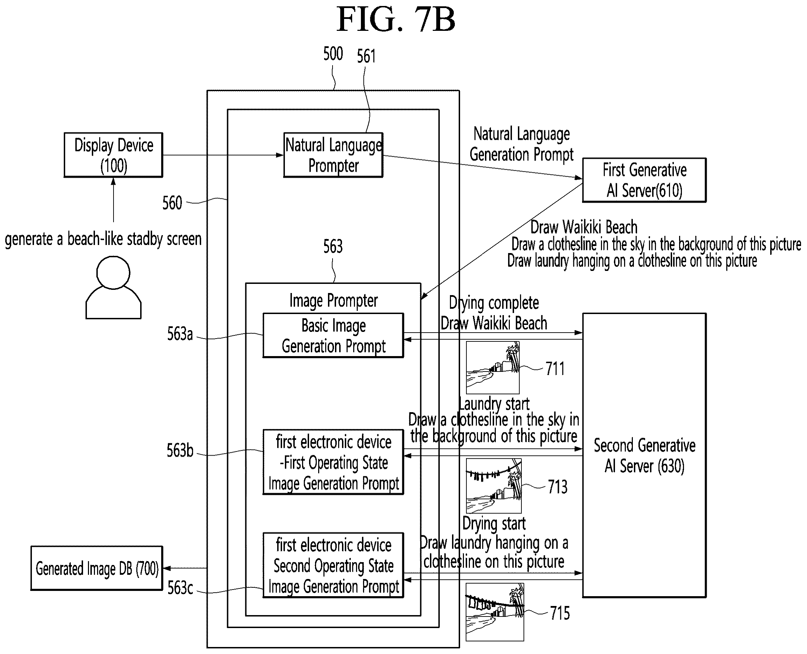

FIGS. 7a and 7b are diagrams explaining a process of generating standby screen images through generative Al according to an embodiment of the present disclosure.

The processor 560 of the Al server 500 may include a natural language prompter 561 and an image prompter 563.

The natural language prompter 561 may generate a natural language generation prompt based on an analysis result of the image generation request received from the display device 100 and information of the electronic device.

The natural language generation prompt may be one sentence including the analysis result of the image generation request and the information of the electronic device.

The natural language prompter 561 may transmit the generated natural language generation prompt to the first generative Al 610 that generates natural language.

The first generative Al 610 may take the natural language generation prompt as input, generate a natural language generation result, and transmit the generated natural language generation result to the image prompter 563 of the Al server 500.

The natural language generation result may include a plurality of sentences representing the analysis result of the image generation request and characteristics of each operating state of the electronic device.

The image prompter 563 may generate an image generation prompt based on the natural language generation result received from the first generative Al server 610.

The image generation prompt may be a prompt including the sentence received from the first generative Al server 610 and the operating state of the electronic device.

The image prompter 563 may transmit the image generation prompt including the sentence and the operating state of each electronic device to the second generative Al server 630 that generates images.

The second generative Al server 630 may generate an image generation result in response to the image generation prompt, and may transmit the generated image generation result to the Al server 500.

The image generation result may be an image generated by the image generation model of the second generative Al server 630 according to the image generation prompt.

The image prompter 563 may generate a plurality of image generation prompts corresponding to the operating states of the electronic device, and may sequentially transmit the generated plurality of image generation prompts to the second generative Al server 630.

The image prompter 563 may sequentially receive a plurality of images corresponding to each of the plurality of image generation prompts from the second generative Al server 630.

In another embodiment, the image prompter 563 may transmit the plurality of image generation prompts to the second generative Al server 630 at once, and may receive the plurality of images from the second generative Al server 630 at once.

The image generation prompt may be any one of a basic image generation prompt 563a, a first operating state image generation prompt 563b, and a second operating state image generation prompt 563c.

The basic image generation prompt 563a may be a prompt commanding generation of a basic image corresponding to the basic operating state of the electronic device.

The first operating state image generation prompt 563b may be a prompt commanding generation of an image corresponding to the first operating state of the electronic device.

The second operating state image generation prompt 563c may be a prompt commanding generation of an image corresponding to the second operating state of the electronic device.

The Al server 500 may transmit the basic image generation prompt 563a to the second generative Al server 630, and may receive a basic image in response to the basic image generation prompt 563a.

The Al server 500 may transmit the first operating state image generation prompt 563b to the second generative Al server 630, and may receive a first image in response to the first operating state image generation prompt 563b.

The Al server 500 may transmit the second operating state image generation prompt 563c to the second generative Al server 630, and may receive a second image in response to the second operating state image generation prompt 563c.

The Al server 500 may store the received basic image, first image, and second image in the generated image DB 700.

FIG. 7b is a diagram explaining a process of automatically generating an image suitable for a voice command according to an actual user's utterance.

In FIG. 7b, it is assumed that the user uttered <generate a beach-like standby screen>.

The display device 100 may transmit voice data corresponding to the voice command uttered by the user to the Al server 500.

The display device 100 may transmit the voice data and information of the electronic device linked with the display device 100 to the Al server 500.

The Al server 500 may also directly collect information of the electronic device linked with the display device 100.

The Al server 500 may convert the voice data into text data and obtain an analysis result of the text data.

The natural language prompter 561 of the Al server 500 may generate a natural language generation prompt based on the analysis result and the information of the electronic device.

The analysis result may include an intention to generate an image with a beach atmosphere on the standby screen.

The information of the electronic device may include a name of the electronic device and operating state information of the electronic device.

The first generative Al server 610 may generate a plurality of sentences based on the natural language generation prompt.

The plurality of sentences generated by the first generative Al server 610 may be <Draw Waikiki Beach>, <Draw a clothesline in the sky in the background of this picture>, and <Draw laundry hanging on a clothesline on this picture>.

Each of the plurality of sentences may include a theme to draw the analysis result and the operating state of the electronic device.

The first generative Al server 610 may transmit the generated plurality of sentences to the Al server 500.

The image prompter 563 of the Al server 500 may generate an image generation prompt by combining each of the received plurality of sentences with the operating state of the electronic device.

The image prompter 563 may generate a basic image generation prompter 563a combining <Draw Waikiki Beach> and the basic state of the electronic device (drying complete state, Drying start). The basic state may be the drying complete state or the power off state.

The second generative Al server 630 may generate a basic image 711 based on the basic image generation prompter 563a, and may transmit the generated basic image 711 to the Al server 500.

The basic image 711 may be an image including Waikiki Beach.

The image prompter 563 may generate a first operating state image generation prompter 563b combining <Draw a clothesline in the sky in the background of this picture> and the first operating state of the electronic device (washing start state, Laundry start).

The first operating state image generation prompter 563b may include <Draw a clothesline in the sky in the background of this picture>, the first operating state of the electronic device, and the first image 711.

The second generative Al server 630 may generate a first image 713 based on the first operating state image generation prompter 563b, and may transmit the generated first image 713 to the Al server 500.

The first image 713 may be an image including Waikiki Beach and a clothesline indicating the start of washing. The first image 713 may further include a clothesline compared to the basic image 711.

The first image 713 may be an image obtained by merging a clothesline representing the characteristic of the first operating state with the basic image 711.

The image prompter 563 may generate a second operating state image generation prompter 563c combining <Draw laundry hanging on a clothesline on this picture> and the second operating state of the electronic device (drying start state, Drying start).

The second operating state image generation prompter 563c may include <Draw a clothesline in the sky in the background of this picture>, the second operating state of the electronic device, and the second image 713.

The second generative Al server 630 may generate a second image 715 based on the second operating state image generation prompter 563c, and may transmit the generated second image 715 to the Al server 500.

The second image 715 may be an image including Waikiki Beach, a clothesline, and clothes hanging on the clothesline indicating drying. The second image 715 may further include clothes hanging on the clothesline compared to the first image 713.

The second image 715 may be an image obtained by merging clothes hanging on the clothesline representing the characteristic of the second operating state with the first image 713.

The Al server 500 may store the basic image 711, the first image 713, and the second image 715 in the generated image DB 700.

The Al server 500 may transmit the basic image 711, the first image 713, and the second image 715 to the display device 100.

The display device 100 may store the basic image 711, the first image 713, and the second image 715 in the memory 140.

The display device 100 may display any one of the basic image 711, the first image 713, and the second image 715 according to the operating state of the electronic device.

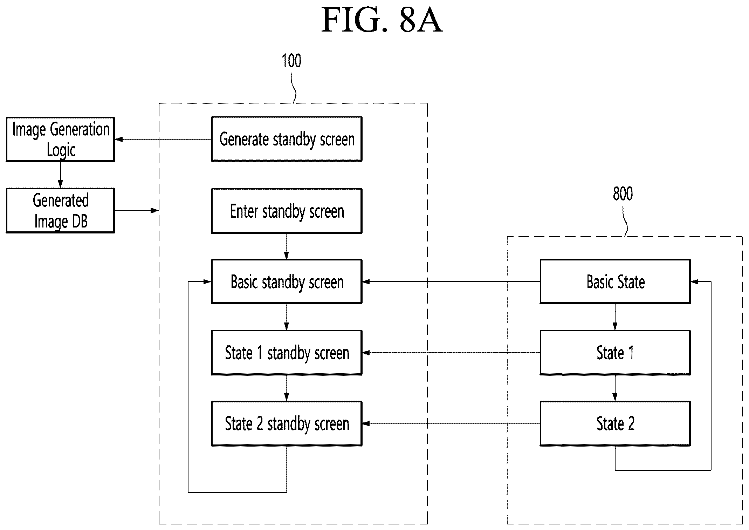

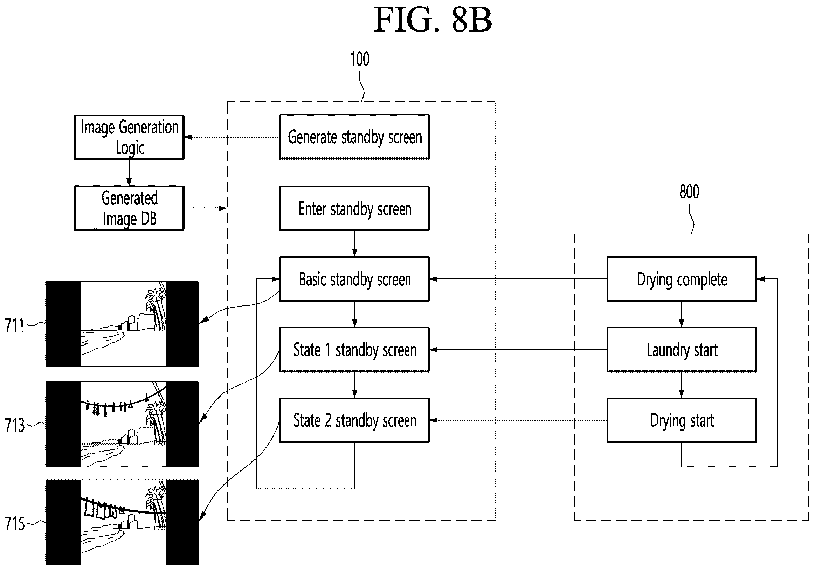

FIGS. 8a and 8b are diagrams explaining changes of images displayed on a standby screen according to state changes of an electronic device linked with a display device.

In FIGS. 8a and 8b, the basic image 711, the first image 713, and the second image 715 may be images generated according to the processes of FIGS. 6 to 7b.

The display device 100 may receive an image generation request for generating a standby screen.

The Al server 500 may generate a plurality of images to be displayed on the standby screen according to the image generation logic of FIGS. 6 to 7b, and may store the generated images in the generated image DB.

The Al server 500 may transmit the generated images to the display device 100.

The display device 100 enters the standby screen.

When the operating state of the electronic device 800 is the basic operating state, the display device 100 may display the basic image 711 on the standby screen. The basic operating state may be any one of the drying complete state or the power off state.

The operating state of the electronic device 800 may change from the basic operating state to the first operating state (state 1), and the electronic device 800 may transmit information about the changed operating state to the display device 100. The first operating state may be a washing start state indicating the start of washing.

The display device 100 may display the first image 713 corresponding to the first operating state on the standby screen based on the information about the changed operating state.

The operating state of the electronic device 800 may change from the first operating state to the second operating state (state 2), and the electronic device 800 may transmit information about the changed operating state to the display device 100. The second operating state may be a drying start state indicating the start of drying. The second operating state may be a state indicating the end of washing and the start of drying.

The display device 100 may display the second image 715 corresponding to the second operating state on the standby screen based on the information about the changed operating state.

Meanwhile, the display device 100 may reproduce the images 711, 713, 715 in the form of GIF (Graphics Interchange Format) according to the change in the operating state of the electronic device 800, or may reproduce the images in reverse order.

When the operating state of the electronic device 800 changes in the order of drying start state, drying complete state, and basic state, the display device 100 may sequentially reproduce the second image 715, the first image 713, and the basic image 711.

As described above, according to an embodiment of the present disclosure, users can have desired images provided on the standby screen with simple utterances for image generation.

Accordingly, the interaction between the user and the display device 100 can be strengthened.

According to an embodiment of the present invention, the above-described method can be implemented as processor-readable code on a medium on which a program is recorded. Examples of processor-readable media include ROM, RAM, CD-ROM, magnetic tape, floppy disk, optical data storage device, and the like.

The display device described above is not limited to the configuration and method of the described embodiments, but the embodiments may be configured by selectively combining all or part of each embodiment so that various modifications can be made.

## Claims

1. An artificial intelligence device comprising:
a communication unit configured to communicate with a display device; and
a processor configured to:
receive, through the communication unit, a request for generating an image for a standby screen from the display device, and operating state information of an electronic device linked with the display device,
generate a first prompt for natural language generation based on an analysis result of the image generation request and the operating state information of the electronic device,
transmit the first prompt to a first generative artificial intelligence server,
receive a plurality of sentences in response to the first prompt from the first generative artificial intelligence server,
generate a second prompt for image generation based on the plurality of sentences, transmit the second prompt to a second generative artificial intelligence server, and
receive a plurality of images corresponding to operating states of the electronic device from the second generative artificial intelligence server.

2. The artificial intelligence device of claim 1, wherein the processor is further configured to transmit the plurality of images to the display device through the communication unit.

3. The artificial intelligence device of claim 1, wherein the processor is configured to obtain, as the first prompt, a sentence generated by combining the analysis result, a name of the electronic device, and the operating state information of the electronic device.

4. The artificial intelligence device of claim 3, wherein each of the plurality of sentences is a sentence commanding generation of an image reflecting the analysis result and a characteristic of each operating state of the electronic device.

5. The artificial intelligence device of claim 4, wherein the second prompt includes the plurality of sentences and the operating states of the electronic device corresponding to each sentence.

6. The artificial intelligence device of claim 4, wherein the second prompt includes any one of the plurality of sentences and the operating state of the electronic device corresponding to the any one sentence.

7. The artificial intelligence device of claim 1, wherein the plurality of images includes:
a basic image reflecting the analysis result and a basic operating state of the electronic device,
a first image obtained by merging a characteristic of a first operating state of the electronic device with the basic image, and
a second image obtained by merging a characteristic of a second operating state of the electronic device with the first image.

8. The artificial intelligence device of claim 1, wherein:
the image generation request is a voice command uttered by a user, and
the processor is configured to convert the voice command into text data and obtain the analysis result based on the converted text data.

9. An operation method of an artificial intelligence device, the method comprising:
receiving a request for generating an image for a standby screen from a display device, and operating state information of an electronic device linked with the display device,
generating a first prompt for natural language generation based on an analysis result of the image generation request and the operating state information of the electronic device;
transmitting the first prompt to a first generative artificial intelligence server;
receiving a plurality of sentences in response to the first prompt from the first generative artificial intelligence server;
generating a second prompt for image generation based on the plurality of sentences;
transmitting the second prompt to a second generative artificial intelligence server; and
receiving a plurality of images corresponding to operating states of the electronic device from the second generative artificial intelligence server.

10. The operation method of claim 9, further comprising transmitting the plurality of images to the display device.

11. The operation method of claim 9, wherein generating the first prompt includes obtaining, as the first prompt, a sentence generated by combining the analysis result, a name of the electronic device, and the operating state information of the electronic device.

12. The operation method of claim 11, wherein each of the plurality of sentences is a sentence commanding generation of an image reflecting the analysis result and a characteristic of each operating state of the electronic device.

13. The operation method of claim 12, wherein the second prompt includes the plurality of sentences and the operating states of the electronic device corresponding to each sentence.

14. The operation method of claim 12, wherein the second prompt includes any one of the plurality of sentences and the operating state of the electronic device corresponding to the any one sentence.

15. The operation method of claim 9, wherein the plurality of images includes:
a basic image reflecting the analysis result and a basic operating state of the electronic device,
a first image obtained by merging a characteristic of a first operating state of the electronic device with the basic image, and
a second image obtained by merging a characteristic of a second operating state of the electronic device with the first image.
